# EUROPEAN PATENT APPLICATION

(11) **EP 2 051 172 A2**
(43) Date of publication of application: **22.04.2009**
(21) Application number: 08251637.8
(22) Date of filing: 08.05.2008
(51) Int. Cl.: G06F 13/38, G06F 3/06

(54) **Interfacing an external attachment device to a computing device**

(30) Priority: 18.05.2007 US 939028 P; 24.07.2007 US 782613
(71) Applicant: MCM Portfolio LLC, Cupertino, CA 95014 (US)
(72) Inventor: Iyer, Sree M., San Jose CA 95135 (US)
(74) Representative: Beresford, Keith Denis Lewis

(57) **Abstract**

An external Serial Advanced Technology Attachment (SATA) device (118) is coupled to a computing device (102) via an interface (200). Data is communicated to and from the SATA device and the computing device via a port (104) of a first type of the computing device, and power is provided to the SATA device via at least one port (106) of a second type of the computing device. There may be a plurality of SATA devices connected by the interface to the computing device. The first type of port may be a SATA port and the second type of port may be a USB port.

## Description

### TECHNICAL FIELD

The present invention relates generally to an interface for coupling an external attachment device to a computing device.

### BACKGROUND

Pervasiveness of digital content has accelerated with Internet accessibility as well as computing speed and storage capacity growth. Not only has media content such as photography, videos, and home movies become increasingly digitized, communications such as email, various tasks, financial records, and other household and business related events are recorded digitally on a personal computer or other computing devices.

Further, miniaturization of storage devices/storage media and increased storage capacity has motivated consumers to create and access digital data almost anytime, anywhere. The proliferation of digital content and integration of digital data with daily tasks has further impacted the need for backup storage, which has become one of the driving forces for the development of external storage since external storage can be operated without having to open a computer case. Furthermore, external storage devices provide a means to transport data from one computer to another.

External storage devices can be connected to USB or 1394 (FireWire) ports to communicate with a computing device. The external devices having USB or FireWire connections are typically devices with IDE interfaces (e.g., parallel ATA). Therefore, a conversion process is typically present to translate the ATA interface protocol to the USB or FireWire protocol used to connect to the computing device and vice versa. However, the need for communication between different formats at the interface negatively affects the data rate able to be achieved with the external storage device. Moreover, currently, the raw interface speed of the USB 2.0 standard is ~480 Mbps and the FireWire is 400 Mbps, whereas the Serial ATA (SATA) standard is 1.5 Gbps or higher.

Therefore, external storage devices with an external Serial Advanced Technology Attachment (e.g., eSATA) interface can potentially provide higher data transfer rates between the storage device and the computing device.

### SUMMARY OF THE DESCRIPTION

One aspect of the invention provides an interface for coupling one or more attachment devices, which may be Serial Advanced Technology Attachment (SATA) devices, to a computing device, the interface comprising a port of a first type fro receiving data from and providing data to a corresponding port of the computing device and a port of a second type for receiving power from a corresponding port of the computing device, and at least one further port for providing data to and receiving data from respective attachment device(s) and providing power to the attachment device(s).

Another aspect of the invention provides a method, comprising: transmitting data to a disk controller and an external device, which may be a Serial Advanced Technology Attachment device, via a first port of a first type, of a computing device; and providing power to the disk controller and the external Serial Advanced Technology Attachment device via at least a second port of a second type of the computing device. The first port of the first type may be an external Serial Advanced Technology Attachment port. The second port of the second type, of the computing device may be a Universal Serial Bus port. Alternatively, the second port of the second type, of the computing device may be a FireWire port. The method may further comprise converting a first serial data stream received by the disk controller to a parallel data stream, the first serial data stream received via a connection with the first port of the first type, of the computing device. The method may further comprise converting the parallel data stream to second serial data stream, the second serial data stream to be transmitted from the disk controller to the external Serial Advanced Technology Attachment device. The external Serial Advanced Technology Attachment device may be an external Serial Advanced Technology Attachment storage device.

One embodiment includes a method, which may be embodied on a system, of transmitting data to a plurality of devices via at least one port of a first type of a computing device, and providing power to the plurality of devices via at least one port of a second type of the computing device. The plurality of devices comprises one or more of a disk controller and an external Serial Advanced Technology Attachment device. In one embodiment, the at least one port of the first type of the computing device is an external Serial Advanced Technology Attachment port and the at least one port of the second type of the computing device is a Universal Serial Bus port.

The present disclosure includes methods and apparatuses that perform these methods, including processing systems, which perform these methods, and computer readable media which when executed on processing systems cause the systems to perform these methods.

Other features of the present invention will be apparent from the accompanying drawings and from the detailed description, which follows.

### BRIEF DESCRIPTION OF THE DRAWINGS

The disclosure is illustrated by way of example and not limitation in the figures of the accompanying drawings in which like references indicate similar elements.

**FIGURE 1A** illustrates an external attachment that communicates with a computing device through a controller, according to one embodiment.

**FIGURE 1B** illustrates a SATA storage device that communicates with a computing device through an interface chip, via an eSATA port and a USB port of the computing device, according to one embodiment.

**Figure 1C** illustrates a SATA storage device that communicates with a computing device through an interface chip, via an eSATA port and a USB port of the computing device, via physical layer converters, according to one embodiment.

**FIGURE 2A** illustrates an example of an interface chip to communicate with a computing device via a plurality of ports of the computing device, according to one embodiment.

**FIGURE 2B** illustrates an example of a plurality of SATA storage devices coupled to an interface chip to communicate with the computing device of **FIGURE 2A****,** according to one embodiment.

**FIGURE 3** is a flow chart illustrating a process to detect and/or to operate one or more eSATA and/or USB devices coupled to a computing device, according to one embodiment.

**FIGURE 4** is a block diagram of a computer system having a machine-readable medium, according to one embodiment.

### DETAILED DESCRIPTION

The following description and drawings are illustrative and are not to be construed as limiting. Numerous specific details are described to provide a thorough understanding of the disclosure. However, in certain instances, well-known or conventional details are not described in order to avoid obscuring the description.

Embodiments of the present disclosure include an apparatus and method of providing power to an external attachment device via a computing device. In one embodiment, the apparatus and method include providing power to an external SATA storage device via a Universal Serial Bus port of the computing device.

An external device can be coupled to a computing device via one or more interface ports of a computing device. The interface ports can be a USB interface, a FireWire (IEEE 1394) interface, and/or an eSATA interface, etc. External storage devices may additionally be connected to a disk controller to be coupled to one or more interface ports of the computing device. The type of disk controller depends on the interface of the external storage device. For example, an IDE disk controller can be used with a storage device having an IDE interface whereas a SCSI disk controller can be used with a storage device having a SCSI interface. The disk controller can be a device separate from the motherboard or built into the motherboard.

A SATA storage device can be connected to a controller to be coupled to an eSATA port of the computing device. In one embodiment, the controller is further coupled to one or more USB ports of the computing device to utilize the USB port to supply power to the controller and/or the SATA storage device coupled to the controller. Multiple USB ports can be utilized depending on system specifications and/or storage device properties.

In one embodiment, the controller is an IDE (or PATA, parallel advanced technology attachment) controller. Therefore, in one embodiment, an IDE to SATA converter is coupled between the controller and the eSATA port of the computing device. In addition, another IDE to SATA converter can be coupled between the IDE controller and the SATA storage device such that the IDE controller is able to communicate with eSATA ports of the computing device and the SATA storage device. In some embodiments, the one or more IDE/SATA converters are built-in to the controller. Alternatively, controllers with interfaces compatible with protocols other than IDE can be used.

In one embodiment, the controller is a SATA or eSATA controller able to communicate with the SATA storage device and the eSATA port of the computing device, without an IDE to/from SATA converter.

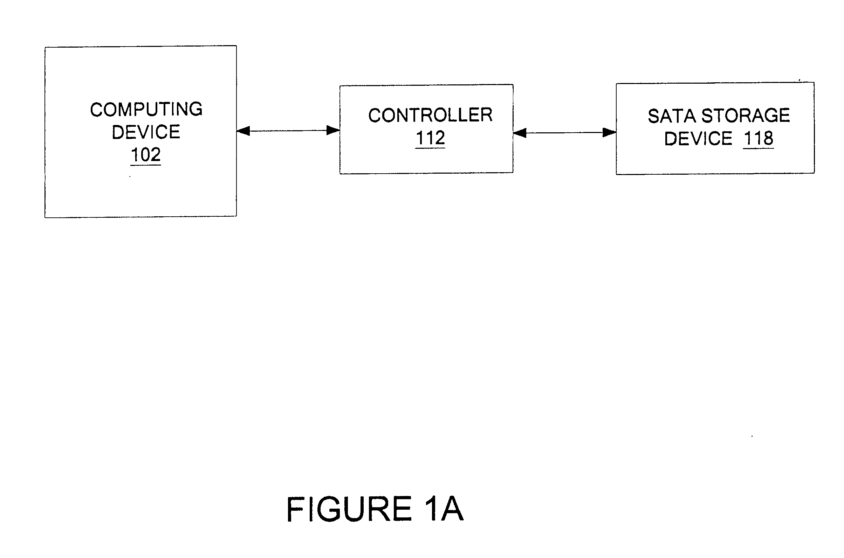

FIGURE 1A illustrates a SATA storage device 118 that communicates with a computing device 102 through a controller 112, according to one embodiment. In one embodiment, the controller 112 interfaces with the computing device via an eSATA connection to utilize an interconnection of relatively longer length. The controller 112 can interface with the external SATA storage device using an eSATA connection or SATA based connections. Furthermore, the SATA storage device, as described and illustrated herein, includes an external SATA storage devices (e.g., eSATA) or other SATA devices that support the transfer of data at 1.5 Gbps, 3 Gbps, or higher.

In one embodiment, the computing device 102 is a computing device able to be coupled to a SATA storage device (e.g., the SATA storage device 118). For example, the computing device 102 may include a chipset to support the SATA interface protocol. The computing device may also have an external port that can be connected to a SATA storage device.

Alternatively, the computing device can have a PCI based SATA controller mounted to the motherboard with an eSATA port accessible from a panel external to the chassis (e.g., a bracket connector). A SATA device can therefore connect to the computing device through the eSATA controller card via the externally accessible eSATA port.

The computing device 102 can be a laptop computer (e.g., notebook or portable computer) that utilizes a PCMCIA based controller-having eSATA interfacing capabilities. In some instances, the eSATA interface protocol capability may be provided with a PCI-Express card. The computing device 102 can be any of a PDA, a laptop, a desktop computer, a telephone, a cellular phone, a portable device, and/or a server device, etc.

The controller 112 includes circuitry to control a storage device. The controller can be built-in to a motherboard or be included in a stand-alone device that is separate from the motherboard. In general, the controller 112 can have one or more of many interfaces (with the computing device and/or with the storage device), including, but not limited to, an IDE (PATA) interface, an EIDE interface, a SCSI interface, a SATA interface, and/or an eSATA interface. For example, the controller 112 can be coupled to the SATA storage device 118. In one embodiment, the controller 112 has an IDE/EIDE interface to be coupled to an IDE to eSATA converter, such that the controller is able to communicate with the SATA storage device.

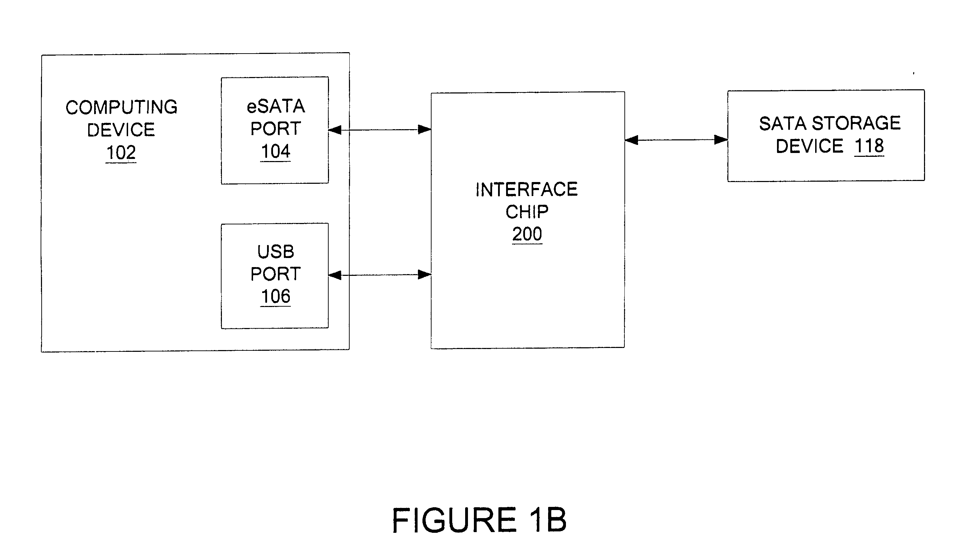

**FIGURE 1B** illustrates a SATA storage device 118 that communicates with a computing device 102 through an interface chip 200, via an eSATA port 104 and a USB port 106 of the computing device 102, according to one embodiment.

The computing device 102 can include multiple interface ports such as the USB port 106 and/or the eSATA port 104. The eSATA and/or USB connectivity can either be built-in to the motherboard or added-on through an external PCI bracket (e.g., a host bus adaptor, or HBA) or card-based controllers. The computing device may also have other ports other than USB ports or eSATA ports, such as FireWire ports that are not shown in the figure.

In one embodiment, the interface chip 200 is coupled to the eSATA port 104, and the USB port 106 of the computing device, via a host interface of the interface chip. The USB port 106 of the computing device 102 can supply power to the interface chip 200 and/or the SATA storage device 118 connected to the interface chip, whereas the eSATA port 104 of the computing device can be used for data transmission to/from the SATA storage device 118.

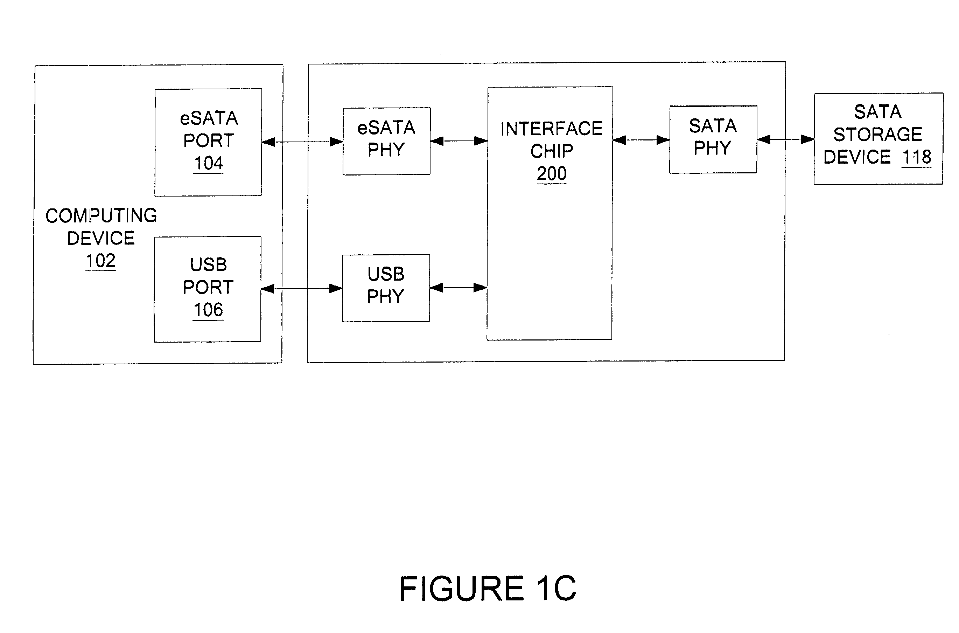

Figure 1C shows a SATA storage device connected to a computing device 102 via an interface chip. The computing device has an eSATA port 104 and a USB port 106. The interface chip 200 is coupled to the eSATA port 104 via a physical layer converter eSATAphy and to the USB port 106 via a physical layer converter USBphy. The storage device 118 is coupled to the interface chip 200 via a physical lad converter SATAphy.

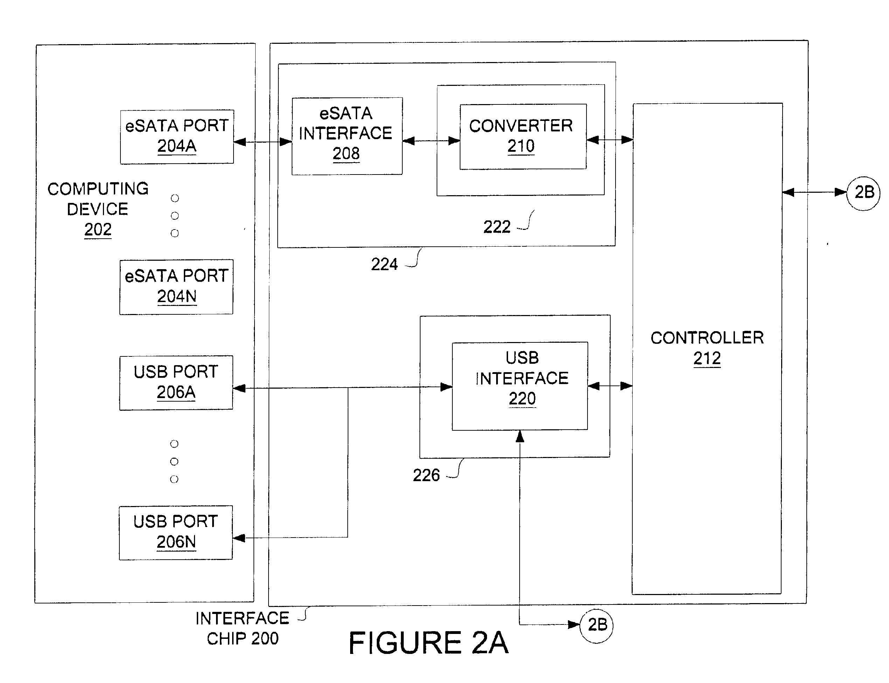

**FIGURE 2A** illustrates an example of an interface chip 200 to communicate with a computing device 202 via a plurality of ports of the computing device 202, according to one embodiment.

The computing device 202 can include multiple interface ports such as USB ports 206A-N and/or eSATA ports 204A-N. The computing device may also have ports other than USB ports and/or eSATA ports, such as FireWire ports that are not shown in the figure.

In one embodiment, the interface chip 200 includes the controller 212. The interface chip 200 may further include an eSATA host interface 208, a converter 210, and/or an USB host interface 220. Even though the eSATA host interface 208 and the converter 210 as illustrated in 204, are shown to be internal to the chip interface 200, in some embodiments, the eSATA host interface 208 and the converter 210, are external to the interface chip 200.

In some embodiments, the eSATA host interface 208 is external the interface chip 200 and the converter 210 is internal to the interface chip. Similarly, the USB host interface 220 can be external or internal to the interface chip 200.

In one embodiment, the controller 212 is coupled to at least one eSATA port 204, and at least one USB port 206 via the eSATA host interface 208 and the USB host interface 220, respectively. The USB host interface 220 can supply power to the controller 212 from one or more USB ports 206 of the computing device.

In some embodiments, multiple USB ports 206 can be utilized, depending on the power requirements of the controller 212 and/or the SATA devices (e.g., storage devices 218) coupled to the controller. The number of USB ports utilized to power the SATA devices can depend on one or more of the following metrics, such as the number of active SATA devices (e.g., SATA storage devices), power supply/consumption of the computing device, and/or the data rate of the SATA interface port (e.g., 1.5 Gbps, 3.0 Gbps, or 6.0 Gbps).

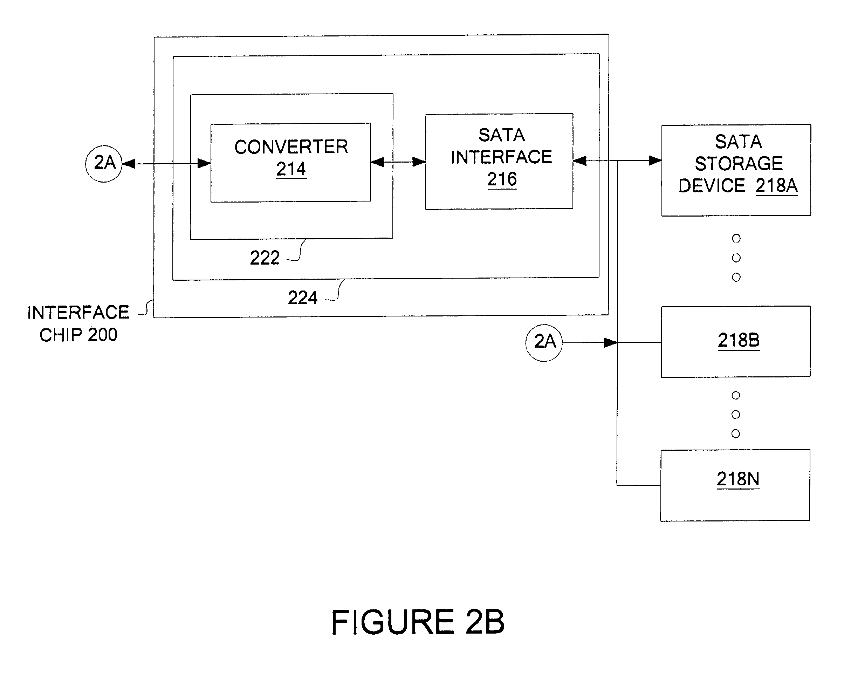

**FIGURE 2B** illustrates an example of a plurality of SATA storage devices 218 coupled to an interface chip 200 to communicate with the computing device 202 of **FIGURE 2A**. In one embodiment, the interface chip 200 is connected to one or more SATA storage devices 218A-N. The USB host interface 220 is to provide a pathway through which the computing device is to supply power to the one or more SATA storage devices coupled to the interface chip 200 via the one or more USB ports 206A-N. The USB interface 220 can be internal or external to the controller 212.

The converters 210 and 214 illustrated in 222 in **FIGURES 2A-2B** may be present in the apparatus for the purposes of translating a signal between the controller and the SATA protocol (e.g., either between the controller and the SATA port 204 of the computing device or between the controller and the SATA device 218), in the situation that the controller is compatible with an interface standard other than the SATA protocol. For example, the controller 212 can be a controller that is compatible with the IDE (or PATA) protocol. Thus, the converters 210 and 214 can translate the data entering and leaving IDE controller. The converters can be built-in to the controller or be external to the controller. The converters described herein and shown in the figures, are also known as PHY (physical layer) converters.

In one embodiment, the controller 212 is a SATA controller. Thus the converters 210 and 214 need not be present for coupling data between the controller and the eSATA port and the SATA devices, respectively. Similarly, the eSATA host interface 208 can be internal or external to the controller.

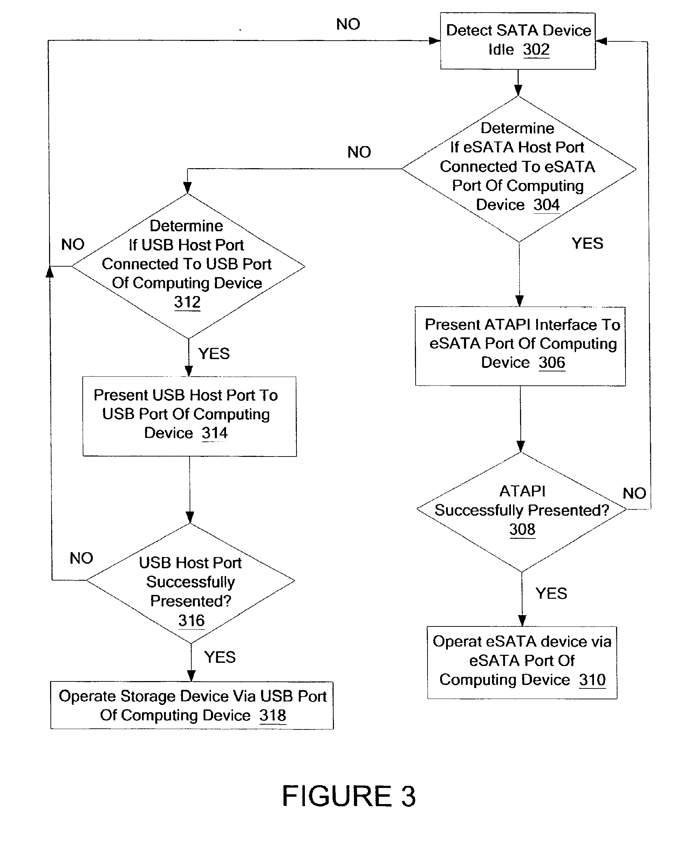

**FIGURE 3** is a flow chart illustrating a process to detect and/or to operate one or more SATA and/or USB devices, according to one embodiment.

In process 302, an interface chip detects the presence of an external SATA device coupled to the interface chip, the external SATA device being in an idle state. In process 304, the interface chip determines if an eSATA host port of the interface chip is connected with eSATA port of a separate computing device. Since the eSATA protocol is capable of operating at a higher data rate than the USB protocol, the eSATA port is used to for data transmission in the presence of a SATA device. Thus, in the presence of the SATA device, the USB port is be used for power transmission to the SATA device rather than for data transmission, according to one embodiment.

If the interface chip is connected with an eSATA port of the computing device, the interface chip, in process 306, presents an ATAPI interface to the eSATA port of the computing device. The ATAPI is a software protocol interface that can be presented over a PATA, SATA, or eSATA interface. In process 308, the interface chip determines if the ATAPI interface has been successfully presented to the computing device.

If the ATAPI interface has been successfully presented to the eSATA port of the computing device, in process 310, the external SATA device is able to exchange data with the eSATA port of the computing device, via the interface chip. In one embodiment, if the ATAPI is not successfully presented to the eSATA port of the computing device, the interface chip cycles back to process 302.

If the eSATA host port of the interface chip is not connected with eSATA port of a computing device, in process 312 the interface chip determines if a USB host port of the interface chip is connected to with a USB port of the computing device. Similarly, in one embodiment, if the ATAPI interface was not successfully presented to the eSATA port of the computing device, the system also proceeds to process 312 to determine if the USB host port of the interface chip is connected to with a USB port of the computing device.

In process 314, if a USB host port of the interface chip is determined to be connected with a USB port of the computing device, the interface chip presents the USB host port of the interface chip to the USB port of the computing device, such that data transmission can occur through the USB port of the computing device through the interface chip to a USB device. In process 316, the interface chip determines if the USB host port of the interface chip was successfully presented to the USB port of the computing device. In process 318, if the interface chip successfully presented the USB host port of the interface chip to the USB port of the computing device, the USB device can exchange data with the computing device through the interface chip. During operation of a USB device both data transmission and power transmission to the USB device occur through the USB host port of the interface chip coupled with the USB port of the computing device.

In one embodiment, if a USB host port of the interface chip is not determined to be connected with a USB port of the computing device, or if the interface chip did not successfully present the USB host port of the interface chip to the USB port of the computing device, the process cycles back to process 302. In alternative embodiments, the processes described above could also be applied to connections and interfaces of other types, including FireWire(IEEE 1394).

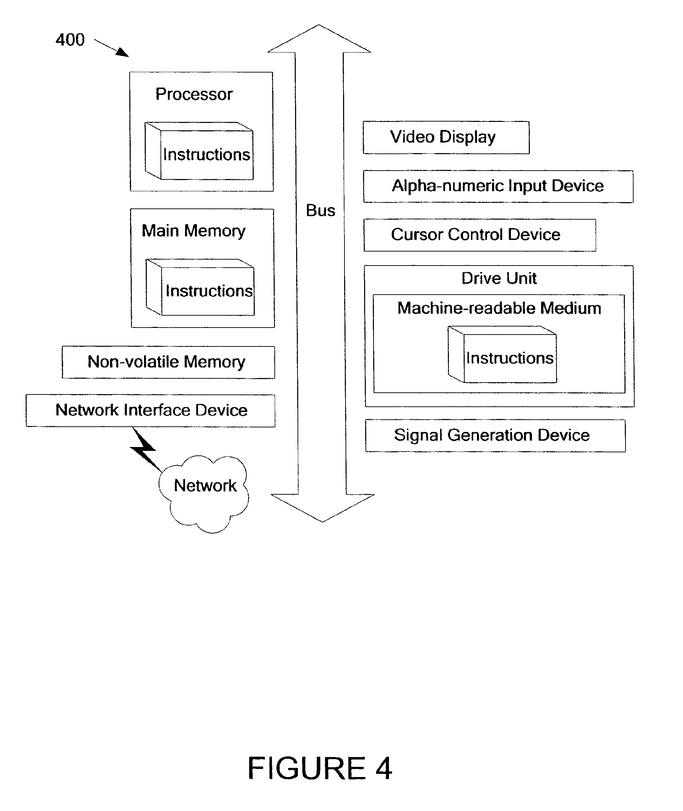

**FIGURE 4** shows a diagrammatic representation of a machine in the exemplary form of a computer system 400 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a client-server network environment, or as a peer machine in a peer-to-peer (or distributed) network environment. The machine may be a server computer, a client computer, a personal computer (PC), a tablet PC, a set-top box (STB), a personal digital assistant (PDA), a cellular telephone, a web appliance, a network router, switch or bridge, or any machine capable of executing a set of instructions (sequential or otherwise) that specify actions to be taken by that machine.

While the machine-readable medium is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. In general, the routines executed to implement the embodiments of the disclosure, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution. Further examples of machine or computer-readable media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

Although embodiments have been described with reference to specific exemplary embodiments, it will be evident that the various modification and changes can be made to these embodiments. Accordingly, the specification and drawings are to be regarded in an illustrative sense rather than in a restrictive sense. The foregoing specification provides a description with reference to specific exemplary embodiments. It will be evident that various modifications may be made thereto without departing from the broader spirit and scope as set forth in the following claims. The specification and drawings are, accordingly, to be regarded in an illustrative sense rather than a restrictive sense.

## Claims

1. An apparatus, comprising:
a disk controller;
a first port of a first type, to communicate data between the disk controller and a computing device;
a second port of a first type, to communicate data between the disk controller and an external Serial Advanced Technology Attachment device; and
a third port of a second type to receive power from the computing device; and
a fourth port of the second type to provide the power received from the computing device via the third port to the external Serial Advanced Technology Attachment device.

2. The apparatus of claim 1, wherein the first and second ports of the first type are external Serial Advanced Technology Attachment ports.

3. The apparatus of claim 1 or 2, wherein the third and fourth ports of the second type are Universal Serial Bus ports.

4. The apparatus of claim 1, 2 or 3, further comprising at least one converter to convert a data stream between a serial format and a parallel format.

5. The apparatus of claim 1, 2, 3 or 4, wherein the at least one converter is to convert the data stream between the external Serial Advanced Technology Attachment protocol and the parallel advanced technology attachment protocol.

6. The apparatus of claim 1, 2, 3, 4 or 5, wherein the external Serial Advanced Technology Attachment device is an external Serial Advanced Technology Attachment storage device.

7. A system, comprising:
a means for communicating data between a disk controller and an external Serial Advanced Technology Attachment device via a first port of a first type, of a computing device; and
a means for providing power to the disk controller and the external Serial Advanced Technology Attachment device via at least a second port of a second type, of the computing device.

8. The system of claim 7, wherein the first port of the first type, of the computing device is an external Serial Advanced Technology Attachment port.

9. The system of claim 7 or 8, wherein the second port of the second type, of the computing device is a Universal Serial Bus port.

10. The system of claim 7, 8 or 9, wherein the second port of the second type, of the computing device is a FireWire port.

11. The system of claim 7, 8, 9 or 10, further comprising means for converting a first serial data stream received by the disk controller to a parallel data stream, the first serial data stream received via a connection with the first port of the first type, of the computing device.

12. The system of claim 11, further comprising means for converting the parallel data stream to a second serial data stream, the second serial data stream to be transmitted from the disk controller to the external Serial Advanced Technology Attachment device.

13. A method comprising: communicating data between a disk controller and an external device, which may be a Serial Advanced Technology Attachment device, via a first port of a first type, of a computing device; and providing power to the disk controller and the external Attachment device via at least a second port of a second type of the computing device.
